# EUROPÄISCHE PATENTSCHRIFT

(11) **EP 3 549 239 B1**
(45) Veröffentlichungstag und Bekanntmachung des Hinweises auf die Patenterteilung: **30.06.2021**
(21) Anmeldenummer: 17794951.8
(22) Anmeldetag: 08.11.2017
(51) Int. Cl.: H02K 5/00, H02K 5/24, H02K 5/15, G01M 13/02

(54) **ELEKTROMOTOR FÜR EINE ANTRIEBSEINHEIT EINES ANTRIEBSSTRANGPRÜFSTANDS**
ELECTRIC MOTOR FOR A DRIVE UNIT OF A DRIVE TRAIN TEST BENCH
MOTEUR ÉLECTRIQUE DESTINÉ À UNE UNITÉ D'ENTRAÎNEMENT D'UN BANC D'ESSAI POUR CHAÎNE CINÉMATIQUE

(30) Priorität: 05.12.2016 DE 102016224138
(43) Veröffentlichungstag der Anmeldung: 09.10.2019
(73) Patentinhaber: ZF Friedrichshafen AG, 88046 Friedrichshafen (DE)
(72) Erfinder: HELL, Christian, 94107 Untergriesbach (DE)
(74) Vertreter: ZF Friedrichshafen AG
(86) Internationale Anmeldenummer: PCT/EP2017/078529
(87) Internationale Veröffentlichungsnummer: WO 2018/103980

(56) Entgegenhaltungen:
- DE-A1- 1 613 413
- DE-A1- 1 915 896
- GB-A- 2 327 817
- US-A- 5 798 587
- "COMBINED ALTERNATOR END FRAME AND ENGINE MOUNTING BRACKET", RESEARCH DISCLOSURE, KENNETH MASON PUBLICATIONS, HAMPSHIRE, UK, GB, Nr. 304, 1. August 1989 (1989-08-01), Seite 620, XP000070145, ISSN: 0374-4353

## Beschreibung

Die Erfindung betrifft einen Elektromotor für eine Antriebseinheit eines Antriebsstrangprüfstands gemäß dem Oberbegriff von Anspruch 1.

Getriebeprüfstände bzw. Antriebsstrangprüfstände zum Prüfen von Kraftfahrzeuggetrieben bzw. von vollständigen Kraftfahrzeugantriebssträngen sind aus dem Stand der Technik bekannt. Derartige Prüfstände werden einerseits verwendet, um Funktionsstörungen im Antriebsstrang unmittelbar nach der Herstellung derselben im Rahmen einer sog. End-of-line-Prüfung durch eine Reihe von Belastungstests zu erkennen. Typische Funktionsstörungen entstehen z.B. durch spielbehaftete Bauteile, wie z. B. Zahnräder, Synchronringe, Synchronkörper, Lamellenkupplungsscheiben und Wellen, die ausgelenkt oder gar zu Schwingungen angeregt werden können. Im Rahmen der Funktionserprobung werden üblicherweise auch das Akustikverhalten und die Schaltqualität geprüft. Andererseits finden derartige Prüfstände aber auch in der Entwicklung und stetigen Verbesserung von Kraftfahrzeugantriebssträngen sowie insbesondere Kraftfahrzeuggetrieben Verwendung. Besonderes Augenmerk liegt hier üblicherweise auf der Dauerfestigkeit sowie der Grundlagenentwicklung neuer technischer Wirkprinzipien. Üblicherweise umfassen derartige Getriebeprüfstände bzw. Antriebsstrangprüfstände einen Elektromotor als Antrieb.

In diesem Zusammenhang beschreibt die DE 10 2012 018 359 A1 einen Fahrzyklus für eine Fahrsimulation, der von einem realen Kraftfahrzeug auf einem Rollenprüfstand durchfahren wird. Der Antriebstrang des Kraftfahrzeugs arbeitet dabei so, dass die Raddrehzahl des Kraftfahrzeugs der jeweiligen Geschwindigkeitsvorgabe des Fahrzyklusses entspricht, ohne dass sich das Kraftfahrzeug tatsächlich fortbewegt. Dies ermöglicht ein Prüfen des Kraftfahrzeugantriebsstrangs nach dem Einbau in das Kraftfahrzeug.

Die DE 43 28 537 C2 offenbart einen Getriebeprüfstand mit einem ersten, als Antriebsmotor dienenden Servomotor und einem zweiten, als Bremsmotor dienenden Servomotor. Der erste Antriebsmotor ist über eine Kupplung mit der Antriebswelle eines zu prüfenden Kraftfahrzeuggetriebes verbunden und wird hinsichtlich seiner Drehzahl über einen PC gesteuert, wobei beliebige Drehzahlverläufe simulierbar sind. Der Bremsmotor ist über eine weitere Kupplung mit einer Abtriebswelle des zu prüfenden Kraftfahrzeuggetriebes verbunden. Auch die Drehzahl des zweiten Motors wird über den PC gesteuert. Bei den vom PC simulierten Drehzahlverläufen handelt es sich um in realen Fahrversuchen gemessene Drehzahlverläufe. Somit kann das Kraftfahrzeuggetriebe gemäß der DE 43 28 537 C2 auch vor dem Einbau in ein Kraftfahrzeug geprüft werden.

Die GB 2 327 817 A offenbart einen Elektromotor für einen Lüfter. Ein Gehäuse des Elektromotors weist zwei Befestigungsbeine auf, die im axial mittleren Bereich des Gehäuses angeordnet sind und sich im Wesentlichen radial-seitlich vom Elektromotor abstrecken.

Unter dem Titel "Combined altarnator end frame and engine mounting bracket", Research disclosure, Kenneth Mason Publications, Hampshire, UK, GB, Nr 304, 1 August 1989 (1989-08-91), Seite 620, XP000070145, ISSN: 0374-4353, wird ein Elektromotor für Automobilanwendungen beschrieben, der an seinem dem Motorritzel zugewandten Axialende im Bereich des vorderen Lagers eine Befestigungsvorrichtung aufweist. Die Befestigungsvorrichtung streckt sich radial-seitlich vom Elektromotor ab.

Aus der DE 19 15 896 A1 ist eine elektrische Maschine bekannt, bei welcher die Ständerbleche derart gestanzt sind, dass Tragekonstruktionen oder zumindest Teile derselben aus dem gleichen Blech mitgewonnen werden. Das Blechpaket bildet ein Gehäuse des Elektromotors.

Die bekannten Antriebsstrangprüfstände sind jedoch insofern nachteilbehaftet, als dass diese aufgrund der zu ihrem Antrieb verwendeten Elektromotoren nicht zum Prüfen von elektrischen Antriebssträngen geeignet sind. Die bekannten Bauformen der verwendeten Elektromotoren unterscheiden nämlich nur zwischen zwei Bauformen: Der sog. Fußausführung und der sog. Flanschausführung. Da zum Prüfen von elektrischen Antriebssträngen Drehzahlen von mehr als 20.000 U/min benötigt werden, können einseitig angeflanschte Elektromotoren aufgrund ihrer mangelnden Steifigkeit nicht verwendet werden. Durch die ebenfalls beim Prüfen von elektrischen Antriebssträngen regelmäßig auftretende Notwendigkeit, Abtriebswellen der Prüflinge mit nur geringem Achsabstand unterhalb oder seitlich des Elektromotors des Prüfstands vorbeizuführen, scheidet auch die Verwendung von Elektromotoren mit Fußausführung aus.

Es ist eine Aufgabe der vorliegenden Erfindung, einen besser zum Prüfen von elektrischen Antriebssträngen geeigneten Elektromotor vorzuschlagen.

Diese Aufgabe wird erfindungsgemäß durch den Elektromotor für eine Antriebseinheit eines Antriebsstrangprüfstands gemäß Anspruch 1 gelöst. Vorteilhafte Ausgestaltungen ergeben sich aus den Unteransprüchen.

Die Erfindung betrifft einen Elektromotor für eine Antriebseinheit eines Antriebsstrangprüfstands, umfassend ein Gehäuse. Der erfindungsgemäße Elektromotor zeichnet sich dadurch aus, dass das Gehäuse mindestens ein Joch zum Abstützen des Elektromotors aufweist.

Bevorzugt handelt es sich bei dem Antriebsstrangprüfstand um einen Antriebsstrangprüfstand für elektrische Kraftfahrzeugantriebe.

Der erfindungsgemäße Elektromotor kann jedoch auch für eine Antriebseinheit zum Prüfen von verbrennerkraftgetriebenen Antriebssträngen ausgebildeten Antriebsstrangprüfständen verwendet werden.

Durch die erfindungsgemäße Ausbildung des Elektromotors ergibt sich der Vorteil, dass der Elektromotor und insbesondere eine Anbindung des Elektromotors über das mindestens eine Joch an die Antriebseinheit des Antriebsstrangprüfstands besonders steif ausgebildet ist. Dadurch werden entsprechend hohe Drehzahlen des Elektromotors ermöglicht, ohne dass es im Betrieb des Antriebsstrangprüfstands zu Prüfstandsschwingungen mit den Prüfvorgang störender Intensität kommt. Da elektrische Kraftfahrzeugantriebe bzw. deren Elektromotoren Ausgangsdrehzahlen von mehr als 20.000 U/min bereitstellen, was deutlich über das Drehzahlspektrum konventioneller Verbrennerkraftantriebe hinausgeht, bestehen besondere Anforderungen hinsichtlich der Steifigkeit und Schwingungsdämpfung der Anbindung des Elektromotors an die Antriebseinheit zum Prüfen elektrischer Kraftfahrzeugantriebe. Eine konventionelle Antriebseinheit eines Antriebsstrangprüfstands wäre daher zum Prüfen elektrischer Kraftfahrzeugantriebe auch denkbar ungeeignet. Die bekannten Elektromotoren sind weiterhin auch schon aufgrund ihrer Bauform zum Prüfen elektrischer Kraftfahrzeugantriebe ungeeignet. Die bekannten Bauformen der verwendeten Elektromotoren sind nämlich üblicherweise entweder als sog. Fußausführung und als sog. Flanschausführung ausgebildet. Die einseitig angeflanschten Elektromotoren eignen sich aufgrund ihrer völlig unzureichenden Steifigkeit nicht zum Prüfen elektrischer Kraftfahrzeugantriebe. Durch die ebenfalls beim Prüfen von elektrischen Antriebssträngen regelmäßig bestehende Notwendigkeit, Abtriebswellen der Prüflinge mit nur geringem Achsabstand teilweise unterhalb oder seitlich des Elektromotors vorbeizuführen, scheidet auch die Verwendung von Elektromotoren mit Fußausführung aus.

Der erfindungsgemäße Elektromotor jedoch überwindet diese Nachteile. Durch die erfindungsgemäße Ausbildung des Gehäuses mit dem mindestens einen Joch kann der Elektromotor über das mindestens eine Joch abgestützt werden, was eine besonders hohe Steifigkeit der gesamten Antriebseinheit ermöglicht. Zudem bleibt der Bauraum unterhalb des Elektromotors bzw. seitlich des Elektromotors frei, so dass dieser Bauraum als Freiraum zum Vorbeiführen einer Abtriebswelle des Prüflings genutzt werden kann.

Das mindestens eine Joch ist bevorzugt metallisch und massiv ausgebildet, insbesondere aus Stahl oder einer Stahllegierung ausgebildet. Alternativ bevorzugt ist das mindestens eine Joch aus Aluminium oder einer Aluminiumlegierung ausgebildet.

Die Antriebseinheit umfasst bevorzugt einen Unterbau, auf welchem sich der Elektromotor über das mindestens eine Joch abstützt. Dieser Unterbau besteht besonders bevorzugt aus dem Material Hydropol, welches sich sehr gut zur Schwingungsdämpfung eignet.

Die Anbindung des Jochs an die Antriebseinheit bzw. an den Unterbau der Antriebseinheit kann dabei wahlweise horizontal oder vertikal erfolgen. D.h., das mindestens eine Joch kann entweder mit einer Oberseite bzw. einer Unterseite der Antriebseinheit bzw. des Unterbaus verbunden werden, oder aber mit einer seitlichen Aufnahme der Antriebseinheit bzw. des Unterbaus verbunden werden. Auch Kombinationen hieraus sind möglich und bevorzugt, insbesondere wenn das Gehäuse mehr als nur ein Joch aufweist.

Weiterhin ist es bevorzugt, dass die Antriebseinheit derart ausgebildet ist, dass eine erste Eigenfrequenz der Antriebseinheit oberhalb der ersten Drehordnung des Elektro-motors liegt. Bei einer Motordrehzahl von 20.000 U/min müsste die Eigenfrequenz der Antriebseinheit also oberhalb von ca. 470 Hz liegen. Dies hat sich zur Prüfung von hochdrehenden elektrischen Kraftfahrzeugantrieben als besonders geeignet erwiesen.

Der erfindungsgemäße Elektromotor ermöglicht bevorzugt gleichermaßen eine sog. Aktivprüfung wie auch eine sog. Passivprüfung, wobei unter dem Begriff Aktivprüfung eine Prüfung eines elektrische Kraftfahrzeugantriebs mit einem elektrischen Antriebsmotor verstanden wird und unter dem Begriff Passivprüfung eine Prüfung eines elektrische Kraftfahrzeugantriebs ohne einen elektrischen Antriebsmotor verstanden wird. Ein entsprechender Antriebsstrangprüfstand eignet sich somit gleichermaßen zum Prüfen des Getriebes bzw. der Lagerungen des elektrischen Kraftfahrzeugantriebs, wie auch zum Prüfen des elektrischen Antriebs des elektrischen Kraftfahrzeugantriebs.

Je nach Auslegung des Elektromotors ist dieser bevorzugt luftkühlbar oder wasserkühlbar oder kombiniert luft- und wasserkühlbar.

Gemäß einer bevorzugten Ausführungsform der Erfindung ist es vorgesehen, dass das mindestens eine Joch einstückig mit dem Gehäuse ausgebildet ist. Daraus ergibt sich der Vorteil, dass die Verbindung des mindestens einen Jochs mit dem Gehäuse des Elektromotors besonders steif ausgebildet sein kann, was eine nochmals verbesserte Schwingungsdämpfung und damit einhergehend eine nochmals verbesserte Genauigkeit der Prüfung begünstigt.

Gemäß einer alternativen bevorzugten Ausführungsform der Erfindung ist es vorgesehen, dass das mindestens eine Joch mit dem Gehäuse verschraubt oder verschweißt ist. Dies stellt eine Alternative zu einer einstückigen Gehäuseausbildung dar und führt bei fachgerecht ausgeführter Verschraubung bzw. Verschweißung zu nahezu identischen Steifigkeiten wie eine einstückige Ausbildung. Gleichzeitig wird jedoch der Herstellungsaufwand für das Gehäuse des Elektromotors reduziert.

Gemäß einer weiteren bevorzugten Ausführungsform der Erfindung ist es vorgesehen, dass das mindestens eine Joch als Querjoch, als Ringjoch oder als Rahmenjoch ausgebildet ist. Diese Ausbildungsformen haben sich gleichermaßen als geeignet erwiesen und erlauben jeweils eine besonders steife Anbindung des Elektromotors an die Antriebseinheit.

Besonders bevorzugt weist das Gehäuse mehrere unterschiedliche Ausbildungsformen von Jochen auf, z.B. ein Querjoch und eine Rahmenjoch.

Unter einem Querjoch wird dabei ein Joch verstanden, dessen Jocharme sich radial-seitlich vom Elektromotor abstrecken.

Unter einem Ringjoch wird ein erweitertes Querjoch verstanden, dessen Jocharme einer jeden Seite an ihren Jochenden durch Längsverbindungen miteinander verbunden sind. Die Längsverbindungen und die Jocharme sind bevorzugt einstückig ausgebildet. Dies führt zu einer nochmals verbesserten Steifigkeit der Antriebseinheit.

Bei einer Ausbildung des Jochs als Querjoch oder als Ringjoch wird der Motor bevorzugt über die Jochenden der Jocharme auf dem Unterbau der Antriebseinheit abgestützt.

Unter einem Rahmenjoch wird ein Joch verstanden, dessen Jocharme in einen Jochrahmen übergehen und den Elektromotor radial vollständig einschließen.

Durch Verwendung eines Rahmenjochs kann der Unterbau der Antriebseinheit entsprechend vereinfacht werden, da der Elektromotor sich über den Jochrahmen direkt auf einem Untergrund abstützen kann. Besonders bevorzugt kann sogar auf den Unterbau vollständig verzichtet werden.

Gemäß einer weiteren bevorzugten Ausführungsform der Erfindung ist es vorgesehen, dass das mindestens eine Joch eine zusätzliche Längsversteifung aufweist. Diese zusätzliche Längsversteifung ist bevorzugt als Längsstrebe ausgebildet. Weiterhin bevorzugt ist sie nicht einstückig mit den Jocharmen ausgebildet sondern nachträglich hinzugefügt, um die Jocharme einer jeden Seite an ihren Jochenden miteinander zu verbinden. Auch dies führt zu einer zusätzlichen Steifigkeit der Antriebseinheit. Bevorzugt ist die zusätzliche Längsversteifung mittels Verschrauben oder mittels Verschweißen mit den Jocharmen verbunden.

Vorteilhafterweise können auch mehrere zusätzliche Längsversteifungen an jeder Seite vorgesehen sein, welche parallel oder in einem vorgegebenen Winkel zueinander angeordnet werden können. Besonders bevorzugt sind die zusätzlichen Längsversteifungen orthogonal zu den Jocharmen angeordnet.

Gemäß der Erfindung ist es vorgesehen, dass das mindestens eine Joch eine Fluidlagerkühlung für mindestens eine Lagerung des Elektromotors aufweist. Bei dem Fluid kann es sich um ein Gas, beispielsweise Luft, oder ein Flüssigkeit, beispielsweise Wasser oder Öl, handeln. Somit können auf einfache Art und Weise die Lager gekühlt werden.

Da das mindestens eine Joch bevorzugt massiv und metallisch ausgebildet ist, können für die Fluidlagerkühlung geeignete Kanäle in das mindestens eine Joch gebohrt werden, um das Fluid zuzuführen und wieder abzuführen.

Insbesondere im Zusammenhang mit den Kanälen für die Fluidlagerkühlung hat sich eine Herstellung des mindestens einen Jochs mittels eines 3D-Druckverfahrens als besonders vorteilhaft erwiesen. In diesem Fall können nämlich die Kanäle besonders einfach direkt bei der Herstellung des Jochs erzeugt werden.

Alternativ bevorzugt ist es auch möglich, das mindestens eine Joch zu gießen, zu schmieden oder zu pressen und die Kanäle für die Fluidlagerkühlung als Bohrungen auszuführen.

Gemäß einer weiteren bevorzugten Ausführungsform der Erfindung ist es vorgesehen, dass das Gehäuse einen Radialdurchmesser von weniger als 270 mm aufweist. Daraus ergibt sich der Vorteil, dass der Elektromotor vergleichsweise schlankbauend ausgebildet ist, um möglichst viel Freiraum unterhalb und seitlich des Elektromotors zu gewährleisten.

Dies begünstigt insbesondere das Prüfen von achsparallel aufgebauten elektrischen Kraftfahrzeugantrieben ohne zusätzliche Umlenkgetriebe. Bei achsparallel aufgebauten elektrischen Kraftfahrzeugantrieben ist die Abtriebswelle außerhalb des elektrischen Antriebs, nämlich achsparallel zur Motorwelle des elektrischen Antriebs, angeordnet.

Gemäß der Erfindung ist es vorgesehen, dass der Elektromotor dazu ausgebildet ist, Drehzahlen von mehr als 25000 U/min zu erreichen. Derartige Drehzahlen entsprechen den Drehzahlen, die im Betrieb eines elektrischen Kraftfahrzeugantriebs von dessen elektrischem Antrieb, also von dessen Elektromotor, erzeugt werden. Somit wird eine realitätsnahe Prüfung des elektrischen Kraftfahrzeugantriebs ermöglicht.

Nachfolgend wird die Erfindung anhand von in den Figuren dargestellten Ausführungsformen beispielhaft erläutert.

Es zeigen:
- Fig. 1: beispielhaft und schematisch einen Elektromotor,
- Fig. 2: eine Schrägsicht des in Fig. 1 gezeigten Elektromotors,
- Fig. 3: ausschnittsweise eine Schrägsicht des in Fig. 1 gezeigten Elektromotors,
- Fig. 4: beispielhaft eine Antriebseinheit und
- Fig. 5: beispielhaft eine weitere mögliche Ausbildungsform eines Elektromotors.

Gleiche Gegenstände, Funktionseinheiten und vergleichbare Komponenten sind figurenübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

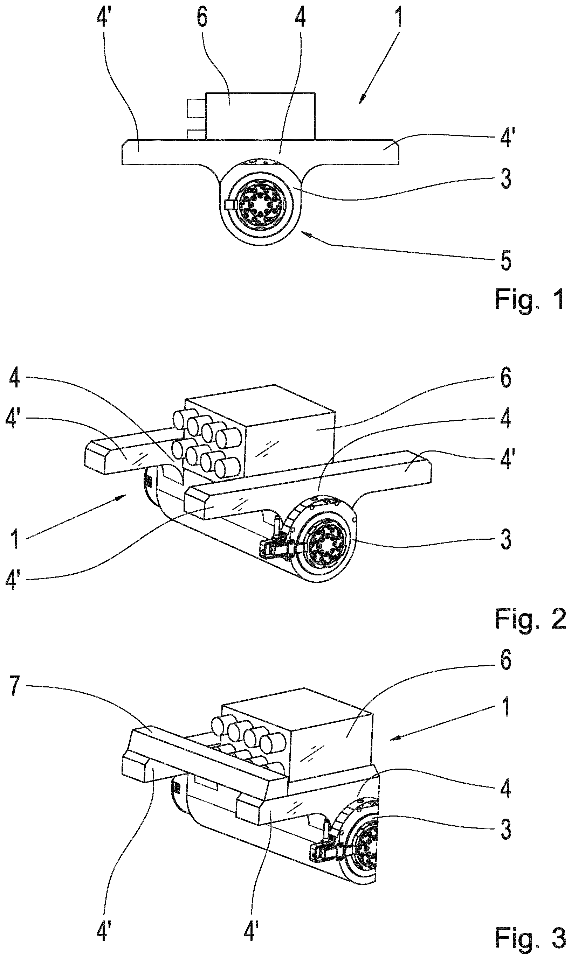

Fig. 1 zeigt beispielhaft und schematisch einen Elektromotor 1 für eine (in Fig. 1 nicht dargestellte) Antriebseinheit 2 eines Antriebsstrangprüfstands. Der Elektromotor 1 umfasst ein Gehäuse 3, welches ein Joch 4 zum Abstützen des Elektromotors 1 aufweist. Das Joch 4 weist Jocharme 4' auf, die sich radial-seitlich vom Elektromotor 1 abstrecken. Beispielsgemäß ist das Joch 4 einstückig mit dem Gehäuse 3 ausgebildet, woraus sich eine besonders hohe Steifigkeit und gute Schwingungsdämpfung der entsprechenden Antriebseinheit 2 ergeben. Durch die gezeigte Ausbildung des Elektromotors 1 bzw. des Gehäuses 3 bleibt unterhalb und seitlich des Elektromotors 1 ausreichend Freiraum 5, um z.B. eine Abtriebswelle eines zu prüfenden elektrischen Kraftfahrzeugantriebs am Elektromotor 1 vorbeizuführen. Der in Fig. 1 gezeigte Elektromotor 1 umfasst weiterhin einen Leistungsanschluss 6, welcher mit einer externen Energiequelle verbindbar ist und den Elektromotor 1 mit elektrischer Leistung speist. Beispielsgemäß weist der Elektromotor 1 einen Durchmesser von 260 mm auf und ist dazu ausgebildet, Drehzahlen von bis zu 25000 U/min zu erreichen.

Fig. 2 zeigt eine Schrägsicht des in Fig. 1 gezeigten Elektromotors 1. Wie in Fig. 2 zu sehen ist, weist das Gehäuse 3 ein vorderes Joch 4 und ein hinteres Joch 4 auf, deren Jocharme 4' sich jeweils radial-seitlich vom Elektromotor 1 abstrecken. Das vordere und das hintere Joch 4 sind axial voneinander beabstandet und jeweils im Bereich der Lager des Elektromotors 1 angeordnet. Dies begünstigt eine effiziente Kühlung der Lager.

Fig. 3 zeigt ausschnittsweise eine Schrägsicht des in Fig. 1 gezeigten Elektromotors 1, wobei jedoch die Jocharme 4' durch eine als Längsstrebe 7 ausgebildete zusätzliche Längsversteifung 7 an ihren Jochenden miteinander verbunden sind. Beispielsgemäß ist die zusätzliche Längsversteifung 7 mittels einer Schraubverbindung mit den Jocharmen 4' verbunden. Dies führt zu einer weiteren Erhöhung der Steifigkeit und einer nochmaligen Verbesserung der Schwingungsdämpfung.

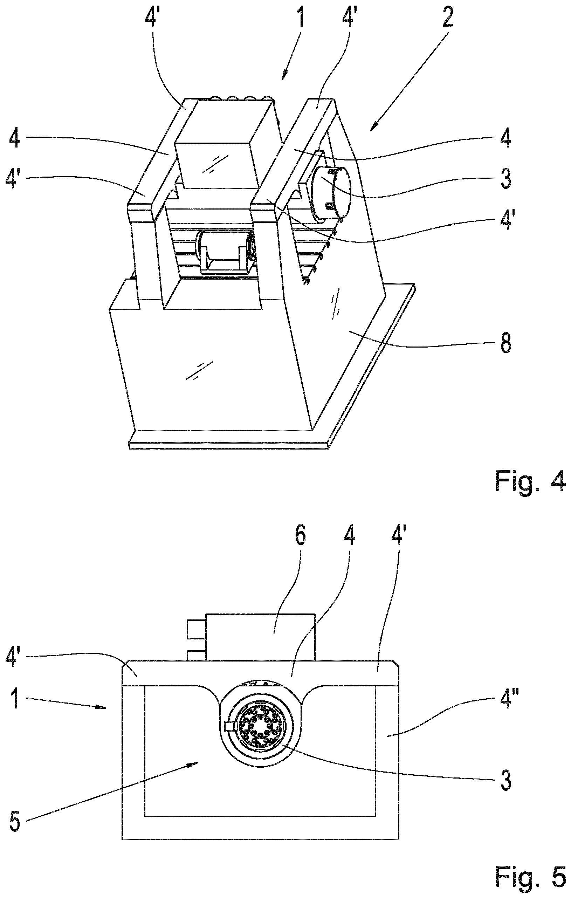

Fig. 4 zeigt beispielhaft eine Antriebseinheit 2, welche den in Fig. 1 beschriebenen Elektromotor 1 aufweist. Der Elektromotor 1 stützt sich über das vordere und das hintere Joch 4, bzw. über die Jochenden der Jocharme 4', horizontal auf einem Unterbau 8 der Antriebseinheit 2 ab. Die in Fig. 4 beispielhaft gezeigte Antriebseinheit 2 umfasst somit also den Elektromotor 1 und den Unterbau 8. Der Unterbau besteht beispielsgemäß aus dem Material Hydropol, welches sich sehr gut zur Schwingungsdämpfung eignet.

Fig. 5 zeigt beispielhaft eine weitere mögliche Ausbildungsform eines Elektromotors 1, wobei das Gehäuse 3 in diesem Fall ein als Rahmenjoch 4 ausgebildetes Joch 4 aufweist. Bei dem gezeigten Rahmenjoch 4 gehen die Jocharme 4' in einen Jochrahmen 4" über, so dass der Elektromotor 1 radial vollständig eingeschlossen ist. Innerhalb des Jochrahmen 4" besteht dabei ausreichend Freiraum 5, um z.B. eine Abtriebswelle eines zu prüfenden elektrischen Kraftfahrzeugantriebs am Elektromotor 1 vorbeizuführen.

### Bezugszeichen

- **1**: **Elektromotor**
- **2**: **Antriebseinheit**
- **3**: **Gehäuse**
- **4**: **Joch**
- **4'**: **Jocharm**
- **4"**: **Jochrahmen**
- **5**: **Freiraum**
- **6**: **Leistungsanschluss**
- **7**: **Längsversteifung, Längsstrebe**
- **8**: **Unterbau**

## Patentansprüche

1. Elektromotor (1) für eine Antriebseinheit (2) eines Antriebsstrangprüfstands, umfassend ein Gehäuse (3), wobei das Gehäuse (3) mindestens ein Joch (4) zum Abstützen des Elektromotors (1) aufweist, wobei der Elektromotor (1) mindestens ein vorderes Joch (4) und ein hinteres Joch (4) aufweist, deren Jocharme sich jeweils radial-seitlich vom Elektromotor abstrecken, wobei das vordere Joch (4) und das hintere Joch (4) axial voneinander beabstandet sind und jeweils im Bereich von Lagern des Elektromotors (1) angeordnet sind, wobei das mindestens eine vordere Joch (4) und hintere Joch (4) eine Fluidlagerkühlung aufweisen und wobei der Elektromotor (1) dazu ausgebildet ist, Drehzahlen von mehr als 25000 U/min zu erreichen.

2. Elektromotor (1) nach Anspruch 1,
**dadurch gekennzeichnet, dass** das mindestens eine vordere und hintere Joch (4) einstückig mit dem Gehäuse (3) ausgebildet ist.

3. Elektromotor (1) nach Anspruch 1,
**dadurch gekennzeichnet, dass** das mindestens eine vordere und hintere Joch (4) mit dem Gehäuse (3) verschraubt oder verschweißt ist.

4. Elektromotor (1) nach mindestens einem der Ansprüche 1 bis 3,
**dadurch gekennzeichnet, dass** das mindestens eine vordere und hintere Joch (4) als Querjoch (4), als Ringjoch oder als Rahmenjoch (4) ausgebildet ist.

5. Elektromotor (1) nach mindestens einem der Ansprüche 1 bis 4,
**dadurch gekennzeichnet, dass** das mindestens eine vordere und hintere Joch (4) eine zusätzliche Längsversteifung (7) aufweist.

6. Elektromotor (1) nach mindestens einem der Ansprüche 1 bis 5,
**dadurch gekennzeichnet, dass** das Gehäuse (3) einen Radialdurchmesser von weniger als 270 mm aufweist.

## Claims

1. Electric motor (1) for a drive unit (2) of a drive train test bench, comprising a housing (3), the housing (3) having at least one yoke (4) for supporting the electric motor (1), the electric motor (1) having at least one front yoke (4) and one rear yoke (4), the yoke arms of which extend away from the electric motor in each case in a radial-lateral manner, the front yoke (4) and the rear yoke (4) being spaced apart axially from one another and being arranged in each case in the region of bearings of the electric motor (1), the at least one front yoke (4) and rear yoke (4) having a fluid bearing cooling means, and the electric motor (1) being configured to reach rotational speeds of more than 25 000 rpm.

2. Electric motor (1) according to Claim 1, **characterized in that** the at least one front and rear yoke (4) are configured in one piece with the housing (3) .

3. Electric motor (1) according to Claim 1, **characterized in that** the at least one front and rear yoke (4) are screwed or welded to the housing (3).

4. Electric motor (1) according to at least one of Claims 1 to 3, **characterized in that** the at least one front and rear yoke (4) are configured as a transverse yoke (4), as an annular yoke or as a frame yoke (4).

5. Electric motor (1) according to at least one of Claims 1 to 4, **characterized in that** the at least one front and rear yoke (4) have an additional longitudinal reinforcement (7).

6. Electric motor (1) according to at least one of Claims 1 to 5, **characterized in that** the housing (3) has a radial diameter of less than 270 mm.

## Revendications

1. Moteur électrique (1) destiné à une unité d'entraînement (2) d'un banc d'essai pour chaîne cinématique, comprenant un carter (3), le carter (3) présentant au moins un étrier (4) pour supporter le moteur électrique (1),
le moteur électrique (1) présentant au moins un étrier avant (4) et un étrier arrière (4) dont les bras d'étrier s'écartent respectivement de manière radiale et latérale du moteur électrique, l'étrier avant (4) et l'étrier arrière (4) étant espacés axialement l'un de l'autre et étant disposés respectivement au niveau de paliers du moteur électrique (1), ledit au moins un étrier avant (4) et étrier arrière (4) présentant un refroidissement de palier à fluide, et le moteur électrique (1) étant réalisé pour atteindre des vitesses de rotation de plus de 25000 tr/min.

2. Moteur électrique (1) selon la revendication 1, **caractérisé en ce que** ledit au moins un étrier avant et arrière (4) est réalisé d'un seul tenant avec le carter (3) .

3. Moteur électrique (1) selon la revendication 1, **caractérisé en ce que** ledit au moins un étrier avant et arrière (4) est vissé ou soudé sur le carter (3).

4. Moteur électrique (1) selon au moins l'une des revendications 1 à 3, **caractérisé en ce que** ledit au moins un étrier avant et arrière (4) est réalisé sous forme d'étrier transversal (4), d'étrier annulaire ou d'étrier de châssis (4).

5. Moteur électrique (1) selon au moins l'une des revendications 1 à 4, **caractérisé en ce que** ledit au moins un étrier avant et arrière (4) présente un raidisseur longitudinal supplémentaire (7).

6. Moteur électrique (1) selon au moins l'une des revendications 1 à 5, **caractérisé en ce que** le carter (3) présente un diamètre radial inférieur à 270 mm.
